# EUROPEAN PATENT APPLICATION

(11) **EP 1 370 085 A2**
(43) Date of publication of application: **10.12.2003**
(21) Application number: 03101494.7
(22) Date of filing: 23.05.2003
(51) Int. Cl.: H04N 7/24

(54) **Method and arrangement for forming a multimedia presentation**

(30) Priority: 04.06.2002 FI 20021071
(71) Applicant: Oplayo Oy, 00180 Helsinki (FI)
(72) Inventor: Laakso, Sami, 02600, ESPOO (FI)
(74) Representative: Savela, Antti-Jussi

(57) **Abstract**

This invention relates to techniques to form an application specific presentation, such as a multimedia show that is sent from a sending terminal to a receiving terminal. The invention transmits the discrete components of the multimedia show during the playtime of the show in such a way that each of them is sent before the show time. Preferably, each discrete component is sent just before the show time.

## Description

### Field of the Invention

This invention relates to techniques to form an application specific presentation. The presentation is, for example, a multimedia show that is sent from a sending terminal to a receiving terminal. The transmission may be done using, for example, a streaming technique. Due to this, the features of the transmission conditions and the receiving terminal affect the features of the application to be provided.

### Background of the Invention

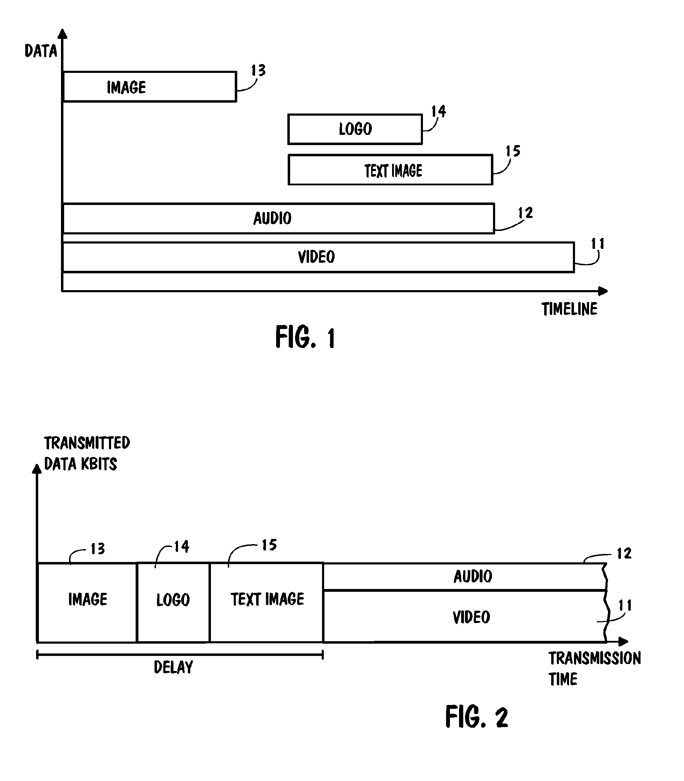

FIG. **1** shows an example of typical components of a multimedia show. The video **11** and audio **12** materials are basic materials for the multimedia show. Both materials are normally sent essentially continuously from a sending terminal to a receiving terminal in a case of a streaming multimedia application. A streaming multimedia application means a solution where multimedia material (video, audio, text, images and other elements) is sent through a network connection to a receiver essentially at the same time as the receiver plays the multimedia show. Naturally other techniques corresponding to the streaming technique may be used for the transmission. The video and audio are commonly referred to as continuous data.

Often a multimedia show comprises still images such as logos, text and other material as in the case of FIG. **1**. At the beginning of the show an image **13** is displayed with the video and audio. After a while the show proceeds to the moment when a logo **14** and a text image **15** are displayed. As can be seen, each of the images and the logo last for a certain time. The structure of the multimedia show can be seen on the timeline of the show. Still images, text, and other corresponding material are commonly referred to as discrete components. The discrete components must be completely downloaded before displaying them in the receiving terminal.

FIG. **2** shows an example of the structure of a known transmission stream. The figure represents the same example as FIG. **1**. At the beginning of the stream the discrete components **13, 14**, and **15** are transmitted from the sending terminal to the receiving terminal. However the play of the multimedia show can only be_started at the moment (or almost at the moment) when the video **11** and the audio **12** are started to be transmitted. This causes a delay in the playing of the show. How much data is possible to transmit depends on an allocated bandwidth of the stream. Due to this the transmission data amount per time unit may also be referred to as the bandwidth. In digital systems the unit of the transmission data amount is bits or bytes and the unit of the bandwidth is normally bits/s or bytes/s.

As can be noted the problem of the known solutions is the delay at the beginning of a multimedia show. For a subscriber, the delay can be too long for a pleasant viewing experience. This may affect the popularity of the multimedia show and thus to the income of the service provider. Another problem, especially in low capacity receiving terminals, such as a mobile phone, is that they need a relatively large buffer for storing discrete components before displaying them. The goals of the invention are to eliminate the delay caused by transmitted discrete components at the beginning of a multimedia show and reduce the size of the buffer in the receiving terminal. These are achieved in a way described in the claims.

### Summary of the Invention

The idea of the invention is to transmit the discrete components of a multimedia show during the playtime of the show in such a way that each of them is sent before the show time. Preferably, each discrete component is sent just before the show time. The playtime of the multimedia show is divided into periods according to starting and ending moments of different data of the multimedia show. The start of end moments of data entities defines division points on the timeline of the multimedia show. The periods are used for calculating a suitable rate for continuous data. When knowing the sizes and transmission moments of the discrete components it is possible to calculate an available data (bit or byte) amount to be transmitted for each period. The calculation of data amounts is convenient to make using cumulative periods beginning from the starting time of the transmission. The calculation takes into account advance periods, which are required for transmitting the continuous data. A certain amount of the continuous data must usually have been downloaded during the advance periods before the show time. The result of the rate calculation is the smallest calculated rate value. Using the result rate value, the availability of a transmission rate is ensured for transmitting the discrete components just before the representation moments.

The inventive method forms a multimedia show that contains at least one discrete component data entity, and at least one continuous data entity. The multimedia show is suitable for transmitting from a sending terminal to a receiving terminal. The method comprises the steps of forming a rate for the continuous data entities in order that the rate ensures transmitting of the discrete components, among the continuous data entities, just before or almost before displaying them; and encoding the continuous data for the rate. Furthermore the method comprises other steps, which are described later.

The inventive arrangement forms a multimedia show that contains at least one discrete component data entity, and at least one continuous data entity. The multimedia show is suitable for transmitting from a sending terminal to a receiving terminal. The arrangement comprises specification means for forming a suitable rate for the continuous data entities of the multimedia show; and encoding means for forming an encoded multimedia show, in such a way that the encoded show is possible to transmit in a predefined transmission rate. Furthermore the invention comprises other means, which are described later.

### Brief Description of the Drawings

In the following the invention is described in more detail by means of FIGs **1** - **6** in the attached drawings where.
- FIG. **1**: illustrates an example of typical components of a multimedia show,
- FIG. **2**: illustrates an example of the structure of a known transmission stream,
- FIG. **3**: illustrates an example of the presentation periods of a multimedia show according to the invention,
- FIG. **4**: illustrates an example of available transmission amounts when discrete components are sent just before the presentation moments,
- FIG. **5**: illustrates an example of the calculation of a rate for continuous data,
- FIG. **6**: illustrates an example of the transmitted data according the calculation of FIG. **5**,
- FIG. **7**: illustrates an example of the inventive method in a flow chart form, and
- FIG. **8**: illustrates an example of an arrangement according to the invention.

### Detailed Description of the Invention

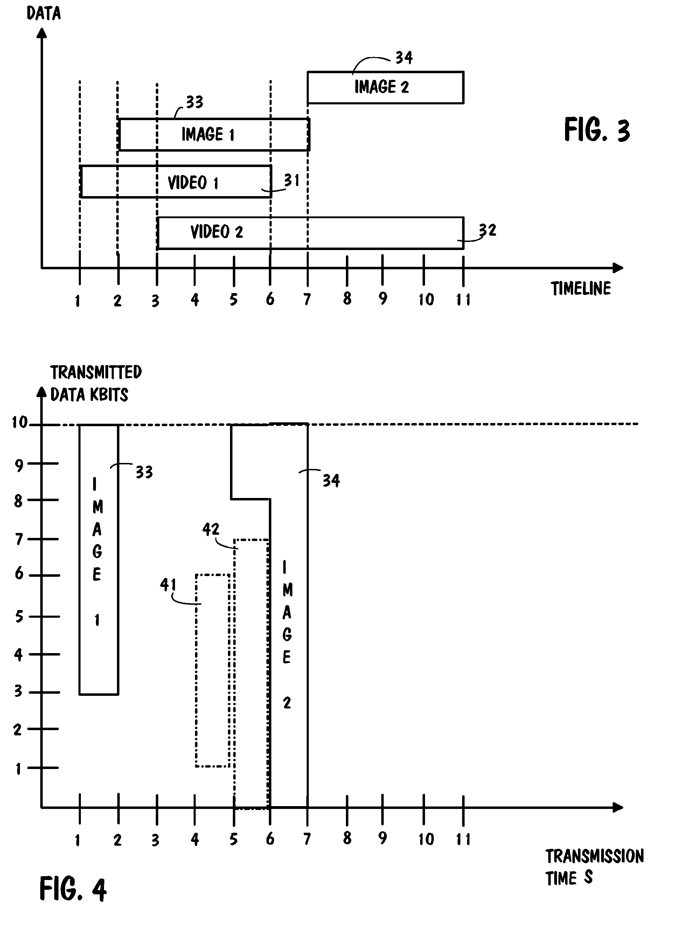

FIG. **3** illustrates an example of the presentation periods of a multimedia show according to the invention. The multimedia show contains two videos: video 1, **31** and video 2, **32**. The receiving terminal shows the videos on two separate displays or on one display that is divided into two areas for the videos. Further, the multimedia show comprises image 1, **33**, and image 2, **34.** As can be deduced, it is actually possible to send more than one multimedia show through the same transmission channel.

The presentation time of the multimedia show is divided into several periods as can be seen in the timeline. A new period starts and the previous ends when the display of some of the data starts or ends. For example, when video 1 starts a new period starts also. The period ends when image 1 starts. On the other hand, when video 1 ends another new period starts also. This period ends when image 1 ends as can be seen in FIG. **3**. The represented data amount remains essentially the same during one period. The changes in the amount of the data to be displayed (and transmitted) happen at the beginning (or end) of each period. It should be noted that the timeline represents the playtime.

FIG. **4** represents an example of available transmission amounts when discrete components are sent just before the presentation moments according to the invention. The transmission rate of this example is defined to be 10 kbits/s. The size of image 1, **33**, is 7 kbits, and image 2, **34**, 12 kbits. Thus it is possible to send image 1 inside one second (i.e. 0,7 seconds are used for transmitting the image)._lmage 2 requires over one second. Both images are sent just before displaying them. Image 1 is sent inside the period of 1 - 2 seconds and displayed in the period of 2 - 7 seconds (Compare FIG. **3**). Image 2 is sent inside the period of 5 - 7 seconds and displayed in the period of 7 - 11 seconds (Compare FIG. **3**). The rest of kbits are available for sending continuous data, i.e. videos 1 and 2. During the period of 1 - 2 seconds it is possible to send 3 kbits of the videos, and during the period of 5 - 6 seconds 8 kbits.

The images should be downloaded in the receiving terminal before showing them. It is preferably to send the discrete components just before the show times, but is also possible to sent them only before the show times. Dot dashed line restricted areas **41** and **42** represent an alternative way to send image 2. As can be seen, discrete components can be sent in several parts. Sending the discrete components just before or almost before the show times eliminates the delay at the beginning of the multimedia show to be played. The delay is especially long if the multimedia show itself is long and contains several discrete components. Furthermore, the size of the buffer reserved for the discrete components in the receiving terminal can be smaller in the inventive arrangement. The discrete components to be transmitted according to the invention reduce the transmission capacity for the continuous data of the multimedia show. Due to this, it is not possible to transmit videos 1 and 2 at the 10 kbits/s rate in the case of FIG. **3** and **4**. A suitable rate for the videos must be found.

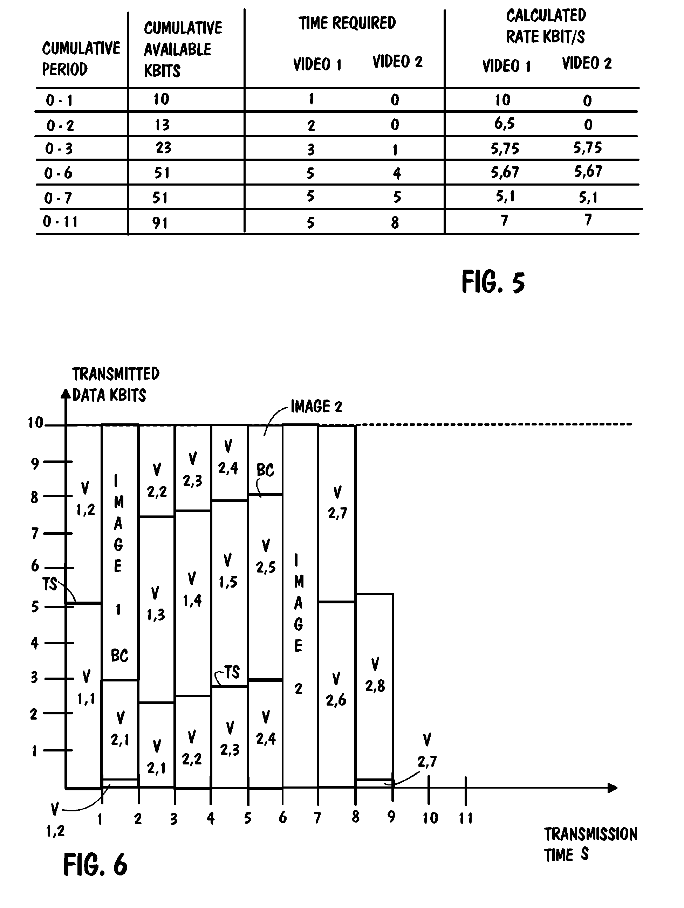

The suitable rate can be achieved in a way illustrated in FIG. **5**. It illustrates an example of the calculation of a rate for continuous data. The calculation is represented in a table form. The first column shows cumulative periods of the multimedia show illustrated in FIGs **3** and **4**. The second column shows the cumulative bit amount that is available for videos 1 and 2, **31** and **32**. For example, the cumulative period of 0 - 3 seconds contains 23 kbits for the videos as can also be seen in FIG. **4**.

Usually a certain amount of a video data must be downloaded in a receiving terminal before it can be displayed. In this example, the advance amount of video is defined in a time scale. In other words, it tells how many seconds the videos should be transmitted in advance. In this case the advance time is one second. The third column shows cumulative advance times for videos 1 and 2. For example, at the beginning of the multimedia show the first second of video 1 must be sent in advance in the period of 0 - 1 seconds, but it is displayed during the period of 1 -2 seconds (Compare FIGs **3, 4,** and **5**).

Now, when the cumulative available kbits are divided by the time required for videos 1 and 2, a calculated rate for the videos is achieved which is represented in the fourth column. For example the cumulative period of 0 - 3 seconds contains 23 available kbits, which is divided by four seconds required for transmitting the videos in advance. The resulting rate is 23 kbits / 4 seconds is 5,75 kbits/s. The rate is calculated for each cumulative period of the multimedia show. The smallest calculated rate is the chosen rate for the videos 1 and 2, i.e. for the continuous data of the multimedia show. As can be seen the smallest rate 5,1 kbits/s is achieved when calculating the period of 0 - 7 seconds. The smallest rate ensures that both the discrete components and the continuous data can be transmitted before displaying them.

FIG. **6** illustrates an example of the transmitted data according the calculation of FIG. **5**. The videos are sent at the transmission rate of 10 kbits/s of the transmission channel, but adjusted to 5,1 kbits/s. The indices marked in FIG. **5** represent the transmitted packets of 5,1 kbits of the videos 1 and 2. For example, V 2,3 means the third packet of video 2, in other words the third second of video 2 that is displayed in the receiving terminal. When comparing FIG. **6** with FIG. **3** it can be noted that all the data can be transmitted before displaying it. For example, V 2,3 is transmitted during 3 - 5 seconds but displayed during 5 - 6 seconds.

A suitable way for sending the discrete components just before displaying them is needed. It is convenient to use a bit counter and/or the timestamps of video data. The bit counter calculates transmitted bits and informs when is the last possible moment to transmit each discrete component. FIG. **6** shows the moments **BC** that the bit counter announces for sending the discrete components. The timestamps are time marked combined into video data. FIG. **6** also shows the timestamps **TS** indicating when the discrete components should be transmitted according to them. For example, the timestamp at the end of the first 5,1 kbits packet of video 1, V1.1, indicates the moment 2 second in the timeline of the multimedia show (Compare FIG. **1**), which is the time when image 1 should be started to be displayed. It can be thought that the timestamp indicates the time when the discrete component is suitable to be sent and the bit counter the final moment when the discrete component must be sent so that it can be displayed at the time. So, the bit counter ensures the timestamps.

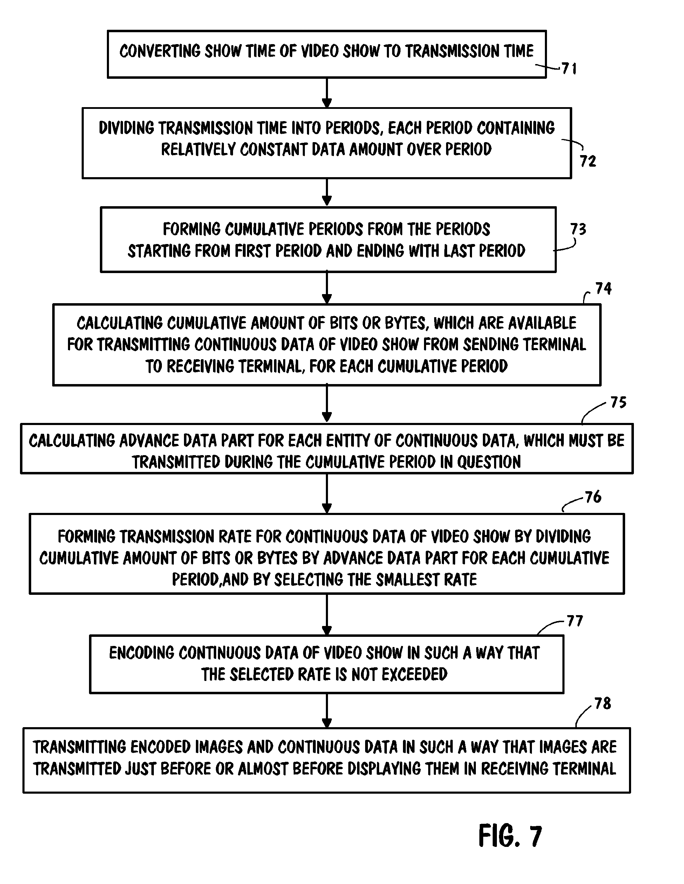

FIG. **7** shows an example of the inventive method in a flow chart form. For providing the multimedia show for a certain application, the requirements of the application must be taken into account. An important requirement is the available transmission capacity for transmitting the multimedia show and the capacity of a receiving terminal for handling the play of the multimedia show. For example, a mobile terminal has a restricted capacity to play the multimedia show, as well as the radio channel used for transmission. The transmission capacity is defined for different type of solutions. In the example above the transmission capacity was defined to be 10 kbits/s.

In order to provide a suitable multimedia show stream and to eliminate the delay at the beginning of playing the show, the inventive method must be used. Furthermore, the inventive method makes it possible to reduce the receiving buffer size of a receiving terminal. First the playtime of the multimedia show must be converted **71** to transmission time. This has been done in the example of FIG. **3**. The timeline of the multimedia show does not start from the beginning of the real start of the multimedia show, but it starts one second in advance. Due to this, the playtime and the transmission time are comparable in a common way.

Next, the transmission time is divided **72** into periods. Each period contains a relatively constant data amount (discrete components and/or continuous data) that is transmitted over the period. Thus the starting and ending points of the periods are the moments when the transmission of a data entity (discrete component or continuous data) starts or ends. Using the periods, cumulative periods are formed **73.** Naturally the first cumulative period comprises the first period, the second cumulative period the first two periods and so on until the last cumulative period comprises all periods. The use of cumulative periods makes it possible to follow available bits or bytes for transmitting information from the beginning of the transmission. It should be noted that the predefined transmission capacity defines the maximum bit (or byte) amount per second as illustrated above. Further, the cumulative periods makes it possible to follow the advance parts of entities of the continuous data (video, audio), which must be sent in the period in question. Some part of the continuous data must usually be transmitted before displaying it. In order to make this, the cumulative amount of bits or bytes (data units) and the advance parts are calculated **74, 75** for each cumulative period. It should be noted that the advance parts of data are expressed as periods (seconds) of video or other continuous data, which must be transmitted during a cumulative period.

Now, a rate can be formed **76** for each cumulative period by dividing the bit (or byte) amount of the cumulative period by the advance data part of the continuous data of the cumulative period. The smallest rate that is achieved is the rate, which ensures that both the discrete components and the continuous data are transmitted before they must be displayed.

Now, when knowing the suitable rate, the continuous data is encoded **77** in such a way that the encoded data is possible to send within the selected rate. In other words, the selected rate must not be exceeded. It should be noted that the discrete components are encoded separately. In the examples above, the sizes of the discrete components are the sizes of the encoded discrete components. So, the sizes of the encoded discrete components must be known before forming a rate for the continuous data.

Furthermore, the method may comprise the transmitting step of the encoded video show from a sending terminal to a receiving terminal **78**. The transmission is made in such a way that the discrete components are sent at right moments among the continuous data just before or almost before they must be displayed in the receiving terminal. The continuous data entities are also transmitted before they must be displayed. As can be seen, the rate of the continuous data is usually not the same thing as the transmission rate. The transmission rate is the real transmission rate for the multimedia show. The rate for continuous data is a rate that allows transmitting discrete components among the continuous data at a predefined transmission rate, in other words a kind of virtual rate. It should be noted that the division of FIG. **7** may be another, for example, steps **74** and **75** can form one single step. However, the inventive method must contain the necessary functions for achieving a desired result.

Further, the transmitting step comprises the sub step of indicating the right moments to transmit discrete component data entities. The sub step of indicating the right moments counts transmitted data units. Certain values of the counts indicate the moments to transmit the discrete component data entities. Furthermore, the sub step of indicating the right moments may, alternatively or with the counting function, observe timestamps in the encoded continuous data entities. Certain values of said timestamps indicate the moments to transmit the discrete component data entities.

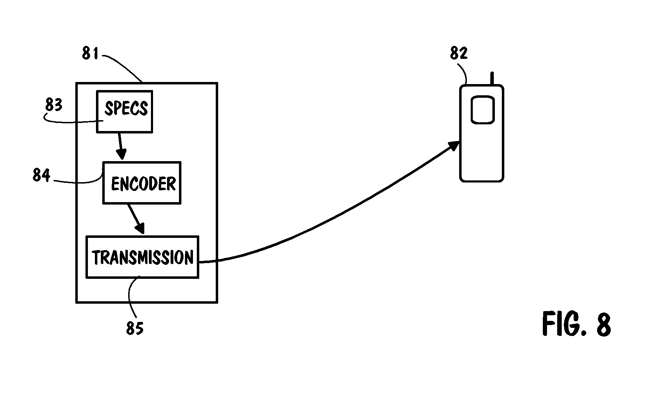

FIG. **8** shows an example of an arrangement according to the invention. The arrangement contains specification means **83** adapted to form a suitable rate for a multimedia show. The specification means use the inventive method. When the suitable rate has been provided, encoding means **84** are used to form an encoded multimedia show; in such a way that the encoded show is possible to transmit in a predefined transmission rate. It should be noted that the discrete components and the continuous data of the multimedia show are encoded separately, and the discrete components may be encoded beforehand or being already in a coded format, at suitable sizes. Streaming means, i.e. transmission means **85** form a suitable stream of the multimedia show from the encoded discrete components and the continuous data (video, audio). The streaming technique means that the data to be transmitted is arranged in a transmission format (transmission packet for example) of the session in question. Other corresponding techniques may be used. The streaming means arrange the discrete components among the continuous data in such a way that the discrete components are sent just before or almost before they must be displayed in a receiving terminal **82.** Naturally, the continuous data is transmitted in a similar way. It is also possible to add a trigger for leaving discrete components out from the multimedia show if the transmission of a discrete component at the right moment is missed. Alternatively the trigger may give a command to use another corresponding discrete component, which size is smaller and can still be transmitted in time. The means **83, 84**, and **85** according to the invention are preferably situated in the sending terminal **81** that is usually the server to a service provider. However, it is also possible that some means, for example the specification means **83** are situated outside the sending terminal, but still functionally connected to the sending terminal.

The buffer for the discrete components and/or continuous data in the receiving element may give a command to pause transmitting when the buffer is full. This function does not prevent the use of the inventive method and arrangement. The receiving terminal needs to send only one request to the sending terminal for ordering the multimedia show. The streaming means (transmitting means) starts the sending of the multimedia show as a response to the order.

Furthermore, the streaming means comprises indication means for announcing moments to transmit the discrete component data entities. The indication means comprises a data unit counter, which calculates transmitted data units. Certain values of said counter indicate the moments to transmit the discrete component data entities. The indication means may, alternatively or with the counter, comprise a timestamp observer, which observes the timestamps in the encoded continuous data entities. Certain values of said timestamps indicate the moments to transmit the discrete component data entities.

It should be noted that although the timestamps and/or the bit counter have been mentioned to indicate moments for transmitting discrete components, it is preferably to adjust them to give moments a little beforehand, since in real solutions may contain unexpected delays. It is preferable to use the full transmission capacity, i.e. the bandwidth, for the transmission, but in some cases it may be better to use a lower transmission rate.

Although, the invention is described in the text with the help of the before-mentioned examples, it is possible to modify the invention to other suitable solutions wherein the invention can be used. Thus it is evident the invention is not restricted to the solutions illustrated in this context, but it can also be use in other solutions, in the scope of the inventive idea.

## Claims

1. A method for forming a multimedia show that contains at least one discrete component data entity, and at least one continuous data entity, the multimedia show being suitable for transmitting from a sending terminal to a receiving terminal, **characterized in that** the method comprises the steps of:
- forming a rate for the continuous data entities in order that the rate ensures transmitting of the discrete components, among the continuous data entities, just before or almost before displaying them; and
- encoding the continuous data for the rate.

2. A method according to claim 1, **characterized in that** the forming step comprises the steps of:
- converting a playtime of the multimedia show to a transmission time;
- dividing the transmission time into periods, each period containing relatively constant amount of the discrete component data entities and/or the continuous data entities over the period;
- forming cumulative periods from said periods, starting from the first period and ending with the last period;
- calculating, for each cumulative period, a cumulative amount of data units, which are available to transmit from a sending terminal to a receiving terminal;
- calculating, for each cumulative period, a cumulative data part of the continuous data entities that must be transmitted during the cumulative period,
- dividing, for each cumulative period, the cumulative amount of data units by the data part of the continuous data entities for forming a rate; and
- selecting the smallest rate.

3. A method according to claim 1 or 2, **characterized in that** the method further comprises the step of transmitting the discrete component data entities among the encoded continuous data in such a way that the discrete component data entities are transmitted at right moments just before or almost before they are displayed in the receiving terminal.

4. A method according to claim 3, **characterized in that** the encoded continuous data entities are transmitted in such a way that they can be displayed at right moments.

5. A method according to claim 4, **characterized in that** the step of transmitting the discrete component data entities comprises the sub step of indicating the right moments to transmit the discrete component data entities.

6. A method according to claim 5, **characterized in that** the sub step of indicating the right moments counts transmitted data units, certain values of the counts indicating the moments to transmit the discrete component data entities.

7. A method according to claim 5 or 6, **characterized in that** the sub step of indicating the right moments observes timestamps in the encoded continuous data entities, certain values of said timestamps indicating the moments to transmit the discrete component data entities.

8. An arrangement for forming a multimedia show that contains at least one discrete component data entity, and at least one continuous data entity, the multimedia show being suitable for transmitting from a sending terminal to a receiving terminal, **characterized in that** the arrangement comprises
- specification means for forming a suitable rate for the continuous data entities of the multimedia show; and
- encoding means for forming an encoded multimedia show, in such a way that the encoded show is possible to transmit in a predefined transmission rate.

9. An arrangement according to claim 8, **characterized in that** the encoding means encodes the continuous data entities for the suitable rate, and encodes the discrete component data entities to predefined sizes if said discrete component data entities fail to be already encoded to said sizes.

10. An arrangement according to claim 9, **characterized in that** the arrangement further comprises transmitting means for forming a suitable stream of the multimedia show from the encoded discrete component data entities and the continuous data entities.

11. An arrangement according to claim 10, **characterized in that** the transmitting means transmits the discrete component data entities just before or almost before they are displayed in the receiving terminal.

12. An arrangement according to claim 11, **characterized in that** the transmitting means transmits the continuous data entities before they are displayed in the receiving terminal.

13. An arrangement according to claim 12, **characterized in that** the transmitting means comprises indication means for announcing moments to transmit the discrete component data entities.

14. An arrangement according to claim 13, **characterized in that** the indication means comprises a data unit counter, which calculates transmitted data units, certain values of said counter indicating the moments to transmit the discrete component data entities.

15. An arrangement according to claim 13 or 14, **characterized in that** the indication means comprises a timestamp observer, which observes the timestamps in the encoded continuous data entities, certain values of said timestamps indicating the moments to transmit the discrete component data entities.

16. An arrangement according to any of claim 8 - 15, **characterized in that** said means are located in the sending terminal.

17. An arrangement according to any of claim 8 - 15, **characterized in that** specification means and the indication means are located outside the sending terminal and connected functionally to the sending terminal, and the transmitting means are located in the sending terminal.
